# EUROPEAN PATENT APPLICATION

(11) **EP 4 800 535 A1**
(43) Date of publication of application: **02.09.2026**
(21) Application number: 24905546.8
(22) Date of filing: 02.08.2024
(51) Int. Cl.: G06F 3/0486

(54) **INFORMATION TRANSMISSION METHOD AND RELATED APPARATUS**

(30) Priority: 20.12.2023 CN 202311772276
(71) Applicant: Honor Device Co., Ltd., Shenzhen, Guangdong 518040 (CN)
(72) Inventor: ZHOU, Shuang, Shenzhen, Guangdong 518040 (CN); QIAN, Kai, Shenzhen, Guangdong 518040 (CN); HUANG, Liwei, Shenzhen, Guangdong 518040 (CN); ZHU, Bin, Shenzhen, Guangdong 518040 (CN); FENG, Haijun, Shenzhen, Guangdong 518040 (CN)
(74) Representative: MERH-IP Matias Erny Reichl Hoffmann Patentanwälte PartG mbB
(86) International application number: PCT/CN2024/109440
(87) International publication number: WO 2025/130050

(57) **Abstract**

This application provides an information transmission method and a related apparatus, applied to a first electronic device, and the method includes: displaying a first interface in response to a first operation, where the first interface includes to-be-transmitted information and a first region, a distance between the first region and a control point does not exceed a first range, and the control point is a position point at which the first operation is performed; displaying a second interface in response to a second operation on the to-be-transmitted information within the first region, where the second interface includes information about applications and the to-be-transmitted information; and transmitting the to-be-transmitted information to a target application in response to a third operation on the to-be-transmitted information, where the target application is at least one of the applications. Because the distance between the first region and the control point does not exceed the first range, the first region can be restricted to be near the control point of the user by configuring the first range, so that the to-be-transmitted information can be transmitted to the application without the need for long-distance operations, thereby improving convenience of information transmission.

## Description

This application claims priority to Chinese Patent Application No. 2023117722767, filed with the China National Intellectual Property Administration on December 20, 2023 and entitled "INFORMATION TRANSMISSION METHOD AND RELATED APPARATUS", which is incorporated herein by reference in its entirety.

### TECHNICAL FIELD

This application relates to the technical field of the information processing field, and in particular, to an information transmission method and a related apparatus.

### BACKGROUND

With the development of intelligent terminals, convenience of using the intelligent terminals becomes increasingly important. An information transmission manner is an information transmission function between applications based on user operations.

There is still room for improvement in convenience of the information transmission function.

### SUMMARY

This application provides an information transmission method and a related apparatus, to resolve a problem of how to improve convenience of an information transmission function. Technical solutions disclosed in this application are as follows.

A first aspect of this application provides an information transmission method, applied to a first electronic device, and. The method includes: displaying a first interface (such as an interface 23) in response to a first operation (such as a long press of 400 milliseconds), where the first interface includes to-be-transmitted information (such as 231) and a first region (a movement range shown as 233), a distance between the first region and a control point does not exceeds a first range (such as 40 dp), and the control point is a position point at which the first operation is performed; displaying a second interface in response to a second operation on the to-be-transmitted information within the first region (such as dragging or pressing and holding), the second interface includes information about applications and the to-be-transmitted information; and transmitting the to-be-transmitted information to a target application in response to a third operation on the to-be-transmitted information (such as dragging the to-be-transmitted information to a display position of the information about applications), where the target application is at least one of the applications.

Because the distance between the first region and the control point does not exceed the first range, the first region can be restricted to be near the control point of the user by pre-configuring the first range, so that the to-be-transmitted information can be transmitted to the application without the need for long-distance operations, such as dragging the to-be-transmitted information to an edge region of a screen, thereby improving convenience of information transmission.

In some implementations, the first interface further includes a cursor, where the cursor is configured to represent a position of the control point of the to-be-transmitted information, to facilitate user operations.

In some implementations, the first operation includes the cursor not extending the first region and a display duration of the first interface reaching a first preset duration (such as a second duration threshold). The first operation uses the cursor and the first region to provide a possibility of triggering an interface for cross-application information transmission. For example, the cursor and the first region may be displayed on a dragged object including the to-be-transmitted information, thereby facilitating user operations.

In some implementations, before the displaying a second interface, the method further includes: displaying a first animation in the first interface. Because application loading requires time, the first animation can reduce perception of the user on a delay, thereby improving user experience.

In some implementations, the first interface further includes a cursor, where the cursor is configured to represent a position of the control point of the to-be-transmitted information. In this case, a manner of displaying the first animation includes: displaying the first animation in response to the cursor not extending the first region and a display duration of the first interface reaching the first preset duration, to reduce a possibility of accidentally triggering the first animation.

In some implementations, during the displaying a first animation, the method further includes: terminating the display of the first animation in response to the cursor extending the first region, where the termination of the display of the first animation indicates that the second interface is not displayed. Based on this, the user can use the cursor and the first region to terminate the display of the first animation, and avoid displaying a "door opening" interface, thereby improving flexibility and convenience of an information transmission function.

In some implementations, the second interface further includes a first control region, where and the first control region is configured to trigger an exit from the second interface. Setting of the first control region facilitates the improvement of the flexibility and the convenience of the information transmission function.

In some implementations, the first interface includes a first sub-interface and a second sub-interface, the to-be-transmitted information is displayed in the first sub-interface, and the method further includes: transmitting the to-be-transmitted information to the second sub-interface in response to a fourth operation on the to-be-transmitted information outside the first region. For example, in a scenario of applications in split-screen display, it facilitates information transmission between applications in split-screen display, thereby achieving compatibility with a function of cross-application information transmission in a scenario such as split-screen display.

In some implementations, before the displaying a first interface, the method further includes: displaying an interface of a first application, where the interface of the first application includes first information (such as texts or images); and performing, in response to an operation on the first information, a function pre-configured by the first application, where the function includes displaying a first object in the interface of the first application (examples of the first object include a selected text floating in an interface 42, or a selected image in an interface 52) based on the operation on the first information (such as selecting or long-pressing). In this case, an implementation of displaying the first interface includes: displaying the first interface (such as an interface 44 or an interface 53) in response to a fifth operation on the first object (such as performing a secondary selection on the selected text and long-pressing, or long-pressing the selected image). The first application, based on the operation on the first information, has pre-configured inherent execution logic, which at least includes displaying the first object. In this case, the user may perform the fifth operation on the first object to trigger the display of the first interface, thereby unifying the information transmission function with inherent function logic of the first application, and achieving improved compatibility.

In some implementations, the method further includes: displaying a fourth interface in response to a sixth operation on the to-be-transmitted information outside the first region (such as moving the cursor out of the first region), where the fourth interface is different from the second interface, and the fourth interface includes a preset second control region (such as a side hot region). In this case, the second interface is displayed in response to a seventh operation based on the fourth interface, where the seventh operation includes moving the to-be-transmitted information to the second control region. In other words, when the fourth interface is displayed instead of the second interface based on a user operation, the display of the second interface can be triggered based on the second control region in the fourth interface, thereby further improving the flexibility of the information transmission function.

In some implementations, the seventh operation further includes: keeping the to-be-transmitted information staying in the second control region for a second preset duration, which can reduce a possibility of accidentally triggering the second interface.

In some implementations, after the displaying a second interface, the method further includes: exiting the second interface and displaying a fifth interface (such as an interface 72) in response to an operation of moving the to-be-transmitted information to the first control region (such as a door closing region) in the second interface, where the fifth interface includes a preset second control region; and displaying the second interface again in response to an eighth operation on the to-be-transmitted information, where the eighth operation includes moving the to-be-transmitted information to the second control region. It can be learned that, after the second interface is exited, the display of the second interface can be triggered again based on the second control region, thereby further improving the flexibility of the information transmission function.

In some implementations, the eighth operation further includes: keeping the to-be-transmitted information in the second control region for a second preset duration (such as 600 milliseconds), thereby reducing the possibility of accidentally triggering the second interface.

In some implementations, a second region is obtained based on a distance between the position of the control point and an edge of a display screen. For example, in a case of right-hand operation, if the control point is located to the right of a center line of the screen, the second region is displayed at a right edge of the screen, thereby further improving convenience.

A second aspect of this application provides an electronic device. The electronic device includes one or more processors, a memory, and a touchscreen, where the memory is configured to store program code, and the processor is configured to run the program code, causing the electronic device to implement the information transmission method according to the first aspect of this application.

A third aspect of this application provides a computer-readable storage medium, storing instructions. The instructions, when run on an electronic device, cause the electronic device to perform the information transmission method according to the first aspect of this application.

### BRIEF DESCRIPTION OF DRAWINGS

FIG. 1 is an exemplary flowchart of cross-application information transmission;
FIG. 2A to FIG. 2E are exemplary diagrams of an implementation process of an information transmission method according to an embodiment of this application;
FIG. 3A to FIG. 3E are exemplary diagrams of an implementation process of another information transmission method according to an embodiment of this application;
FIG. 4A to FIG. 4F are exemplary diagrams of an implementation process of another information transmission method according to an embodiment of this application;
FIG. 5A to FIG. 5E are exemplary diagrams of an implementation process of another information transmission method according to an embodiment of this application;
FIG. 6A to FIG. 6F are exemplary diagrams of an implementation process of another information transmission method according to an embodiment of this application;
FIG. 7A to FIG. 7H are exemplary diagrams of an implementation process of another information transmission method according to an embodiment of this application;
FIG. 8 is an exemplary diagram of a rule for dividing a "door opening" region in an information transmission method according to an embodiment of this application; and
FIG. 9 is an exemplary structural diagram of an electronic device according to an embodiment of this application.

### DESCRIPTION OF EMBODIMENTS

In the specification, claims, and accompanying drawings of this application, the terms "first", "second", "third", and the like are intended to distinguish between different objects rather than to limit a specific order.

In embodiments of this application, the term "exemplary" or "for example" is used to represent giving an example, an illustration, or a description. Any embodiment or design scheme described by using "exemplary" or "for example" in embodiments of this application should not be explained as being more preferred or having more advantages than another embodiment or design scheme. In particular, the terms such as "exemplary" and "example" as used herein are intended to present the related concept in a specific implementation.

Cross-application information transmission refers to information transmission between two applications in the same device, that is, obtaining information through one application, which is referred to as target information, and sharing, favoriting, or editing the target information through the other application. For example, a text or an image on a webpage in a browser is forwarded to a WeChat friend, or a picture sent by a WeChat friend is sent to a QQ friend.

To improve convenience of cross-application information transmission, in some implementations, a "continuous" manner is used, allowing a user to perform cross-application information transmission without the need for operations such as copying and pasting or switching between applications. In other words, throughout the operation process, the finger of the user does not need to leave a screen of an electronic device. The operation is simple and quick, which can effectively improve efficiency of the user in performing cross-application information transmission, thereby improving user experience.

In the embodiments provided in this application, a "cross-application transmission interface" is an interaction manner provided by the electronic device for cross-application information transmission based on the user. In some embodiments of this application, the function may also be referred to as "smart transfer". As indicated by its name, in any interface displayed by the electronic device, when the user needs to perform cross-application information transmission in the interface, the user only needs to long-press an information element in the interface and drag the information element to an edge of the screen. The electronic device then performs three-dimensional transformation on the interface originally displayed on the screen, creating a visual effect of pushing the interface inward on the screen, and displays, on a side of the screen, an icon recommended by the electronic device, such as an application icon. Then, when the user releases dragged information element on the icon, the information element can be transmitted to the application corresponding to the icon. Icons displayed in the cross-application transmission interface provided in this application may be application icons, or may be icons of some or all of application services provided by applications. This is not limited in this application.

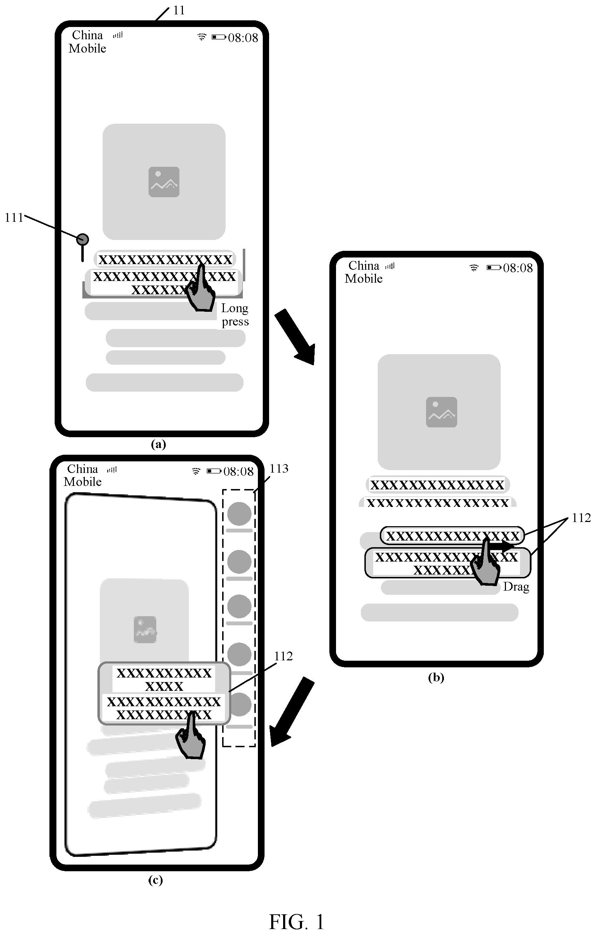

FIG. 1 shows an example of implementing cross-application information transmission in a "continuous" manner. A user drags a text 111 in an interface 11. After the selected text 111 is long-pressed, the selected text floats as a draggable element 112. After the user drags the draggable element 112 to an edge region of the interface, as shown in (c) of FIG. 1, an electronic device displays a plurality of applications icons 113 in the edge region. The user may drag the draggable element 112 to an application icon, to transmit the selected text to the application represented by the application icon.

It can be seen from FIG. 1 that, a current cross-application information transmission manner requires the user to drag to-be-transmitted information and perform an operation on a side region of a screen of the electronic device to trigger a cross-application transmission interface, and further implement cross-application information transmission based on the cross-application transmission interface.

Convenience of this operation manner is to be improved. Especially when the user holds and operates with one hand, it is inconvenient for the user to move the to-be-transmitted information to the edge region of the screen.

To resolve the foregoing technical problem, the embodiments of this application provide an information transmission method and an electronic device, to improve convenience of cross-application information transmission.

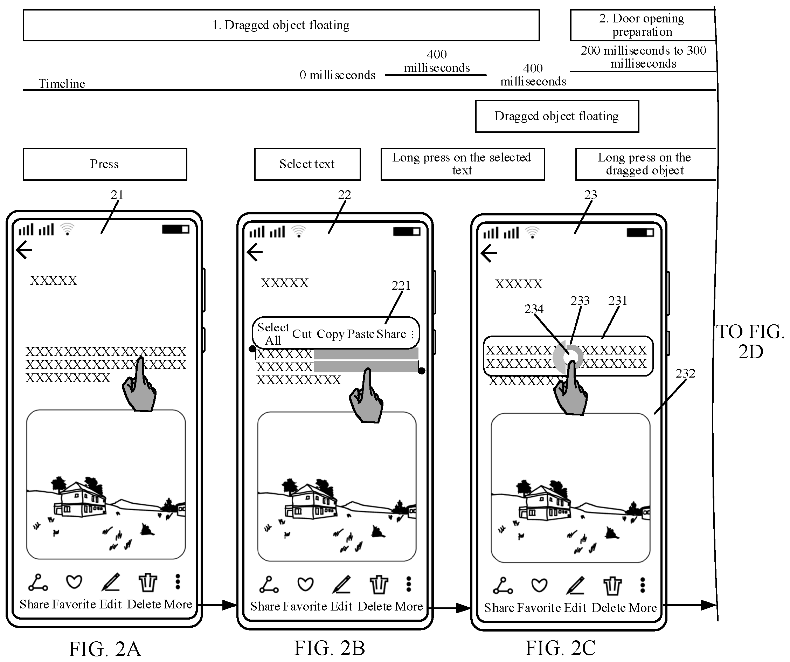

FIG. 2A to FIG. 2E show implementation processes of an information transmission method according to an embodiment of this application.

As shown in FIG. 2A, an interface 21 is an example of an interface of a first application. Examples of the first application include, but are not limited to, a browser, contacts, memo, notes, and a gallery that run on an electronic device. This is not limited in this embodiment.

In FIG. 2A, the interface of the first application is exemplified by including texts and images. It may be understood that, the content displayed in the interface of the first application is not limited to texts and images, and may include only texts, only images, or the like. This is not limited in this embodiment.

A user triggers a text selection mode in the interface 21 of the first application through one or more operations such as pressing. In the text selection mode, to-be-transmitted information may be selected. For example, in an interface 22 shown in FIG. 2B, the user selects a text. During the text selection process of the user, an operation control bar 221 pops up in the interface (that is, the interface 22) of the first application, and examples of operation controls included on the operation control bar 221 are "Select All", "Cut", "Copy", "Share", and the like. The user may tap the operation control to implement an operation on the selected text. For ease of user operations, the selected text is displayed differently from other displayed content. For example, the selected text is displayed in a preset background color in the interface 22, so that the background color of the selected text is darker than that of unselected texts and images.

After the user presses and holds the selected text for a first duration threshold, such as 400 milliseconds (that is, a long press), as shown in FIG. 2C, an interface 23 is displayed. The interface 23 includes a dragged object 231 and a non-dragged object 232. The dragged object 231 is an element that can be dragged to move, and in this embodiment, is displayed with a floating effect from the interface 23. The dragged object 231 includes the selected text.

The non-dragged object 232 displays content other than the selected text in the interface 21 of the first application, and is displayed with the same style (such as size and format) as in the interface 21. It may be understood that, the dragged object 231 is a region displayed with a floating effect from a screen compared with the non-dragged object 232. The effect is not limiting, as long as the effect can highlight a difference between the selected text and the unselected content in the interface 21 and conveniently indicate to the user that the objected is movable.

As shown in FIG. 2C, the interface 23 further displays a movement range 233 and a cursor 234.

The cursor 234 represents a current position of an object (a finger of the user is used as an example in FIG. 2A to FIG. 2E) used for selecting the text. For example, a specific form of the cursor 234 shown in FIG. 2C is two concentric circles, that is, a white circle and a gray ring surrounding and adjacent to the white circle, but this is not limiting. The cursor 234 can be displayed in any style such as a form or a color that can be displayed.

The movement range 233 represents a range within which a cross-application transmission interface can be triggered. In other words, the cross-application transmission interface may be triggered only when the cursor 234 does not move beyond the movement range 233, and the cross-application transmission interface is not triggered when the cursor 234 moves beyond the movement range 233. The movement range 233 shown in FIG. 2C is represented as a circle. A region inside a boundary of the circle belongs to a range represented by the movement range 233, and a region outside the boundary of the circle does not belong to the range represented by the movement range 233.

In some implementations, after the user long-presses the selected text, the cursor 234 and the movement range 233 are displayed in the interface 23 based on a contact range between the finger of the user and the screen. For example, with a center of a contact region between a mobile phone and the screen as a center of the circle, the cursor 234 is displayed with a preset radius, and the movement range 233 is displayed with a radius greater than that of the cursor 234. An example of the radius of the movement range 233 is 40 dp.

After the cursor 234 and the movement range 233 are displayed, the user may move the dragged object 231 in the interface 23 through a drag operation. During the movement of the dragged object 231, the cursor 234 moves with the movement of the finger of the user. The cursor 234 may move out of the movement range 233, or may not move out of the movement range 233. Certainly, after the cursor 234 and the movement range 233 are displayed, the finger of the user may not move.

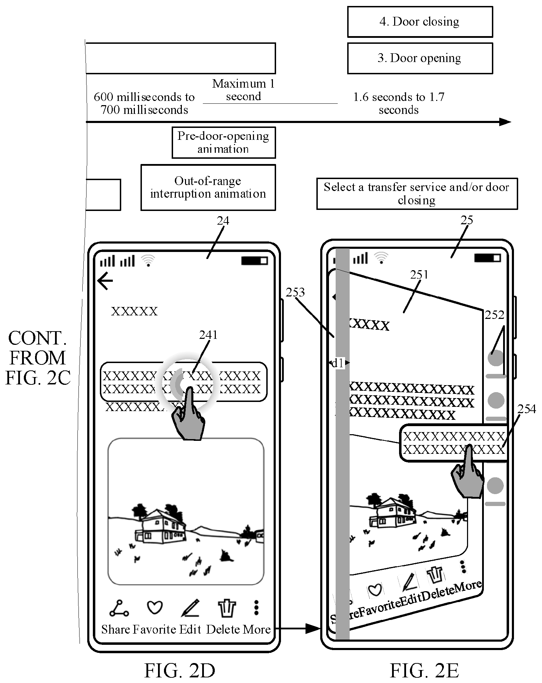

Starting from a moment at which the dragged object 231 floats (that is, is displayed), if a display duration of the dragged object 231 reaches a second duration threshold, and the cursor 234 does not move out of the movement range 233, a first animation 241 is displayed, as shown in FIG. 2D. The second duration is selected within a preset first range. An example of the first range is 200 milliseconds to 300 milliseconds.

The first animation 241 indicates that the cross-application transmission interface (that is, a "door opening" effect) is about to be displayed. Because before the cross-application transmission interface is displayed, an application included in the cross-application transmission interface (that is, at least one second application) needs to be loaded first. A loading process may require a relatively long time, and especially when the cross-application transmission interface includes a large number of applications, a maximum loading time may reach one second. Therefore, displaying the first animation 241 can reduce a possibility of a poor user experience caused by a relatively long loading time. As shown in FIG. 2D, the first animation 241 is displayed on an interface 24. The first animation 241 is displayed based on the movement range 233 and the cursor 234, to achieve a unified interface style. An example of the first animation 241 is a plurality of concentric rings displayed with a center of the movement range 233 as a center and a length greater than the radius of the movement range 233 as a radius, where the plurality of concentric rings have different colors and synchronously shrink toward the center.

In some implementations, during the display of the first animation, the dragged object 231 cannot be moved. In this case, if the user releases the finger pressing the screen, the first animation is interrupted, that is, the playback of the first animation is stopped. In some other implementations, during the display of the first animation, the dragged object 231 can be moved. In this case, if the user releases the finger pressing the screen, or the cursor 234 moves out of the movement range 233, the playback of the first animation is stopped.

If the first animation is interrupted, the interface switches to the interface 21 shown in FIG. 2A or the interface 22 shown in FIG. 2B. In other words, a cross-application transmission interface shown in FIG. 2E is no longer displayed. When the first animation is not interrupted and finishes playing, as shown in FIG. 2E, a cross-application transmission interface 25 is displayed. The cross-application transmission interface 25 includes an application interface 251 having the "door opening" effect, information 252 about at least one second application, a "door closing" region 253, and to-be-transmitted information 254.

The application interface 251 having the "door opening" effect is an interface having a "door opening" effect toward the screen, and the application interface 251 having the "door opening" effect is obtained based on the interface 21 of the first application. Compared with the interface 21 of the first application shown in FIG. 2A, in addition to having the "door opening" effect toward the screen, the application interface 251 having the "door opening" effect further differently displays the selected text and the unselected content. In some implementations, the selected text is displayed in a color different from that of the unselected content, to indicate the content of the to-be-transmitted information to the user (not shown in FIG. 2A to FIG. 2E).

Examples of the information 252 about the second application include an icon and a name of the second application. Using FIG. 2E as an example, icons of the second application are circular, and each icon of the second application has a uniform circular border, to achieve a neat and unified style. Content displayed in the circular border of the icon is set based on an original icon of the application. For example, the original icon of the application is transformed into a circle and used as the application icon. The original icon is an icon of the application displayed in a region such as a desktop of the electronic device, and is used to distinguish the application from other applications. Using FIG. 2E as an example, the name of the second application is represented as a line segment, and the name of the second application may be a name used for displaying the second application on the desktop.

The information about the second application may alternatively be information about a second application service. The second application service is a service that can be provided by the second application. For example, if the second application is the "Gallery", the second application service is an "image editing" service provided by the "Gallery".

The "door closing" region 253 represents a trigger region for closing the cross-application transmission interface 25. To maintain consistency with the "door opening" display effect, the "door closing" region 253 is displayed on the side of the "door" that is not opened, that is, a region opposite to a display region of the information 252 about the second application. In an example, a width d1 of the "door closing" region 253 is 20% of a width of the screen. After the user moves the to-be-transmitted information 254 to the "door closing" region 253 and it stays for a third duration threshold, such as 600 milliseconds, the cross-application transmission interface 25 is closed, and the electronic device may display the interface 21 shown in FIG. 2A to FIG. 2E.

The to-be-transmitted information 254 is an image of the dragged object 231 scaled down, such as a thumbnail. In other words, compared with the dragged object 231, the to-be-transmitted information 254 has no difference except in size, to reduce a possibility of blocking the information about the second application in the cross-application transmission interface 25.

The user may drag the to-be-transmitted information 254 to a region of any icon or name of the second application in the information 252 about the second application (referred to as a target application), and release the finger pressing the screen, so that the to-be-transmitted information 252 is transmitted to the target application.

In FIG. 2A to FIG. 2E, "Press" corresponding to the interface 21 may be understood as an operation that the user can perform based on the interface 21, "Select text" corresponding to the interface 22 may be understood as the user selecting the text based on the interface 22, and "Long press on the selected text" corresponding to the interface 22 and the interface 23 may be understood as an operation of a long press on the selected text, which triggers switching from the interface 22 to the interface 23. Based on a timeline, after the long press on the selected text exceeds 400 milliseconds, the dragged object floats, thereby triggering switching from the interface 22 to the interface 23. "Long press on the dragged object" corresponding to the interface 23 and the interface 24 may be understood as that the user long-presses the dragged object for a second duration, which, as shown on the timeline, is a pre-selected duration within 200 to 300 milliseconds, thereby triggering switching from the interface 23 to the interface 24. "Dragged object floating" corresponding to the interface 23 represents an important node in the process shown in FIG. 2A to FIG. 2E that is displayed in the interface 23.

"Pre-door-opening animation" corresponding to the interface 24 represents an important node in the process shown in FIG. 2A to FIG. 2E that is displayed in the interface 24. "Out-of-range interruption animation" corresponding to the interface 24 represents an operation that the user can perform based on the interface 24 and a resulting important effect. The effect of the interruption animation is not shown in FIG. 2A to FIG. 2E.

"Select a transfer service and/or door closing" corresponding to the interface 25 represents an operation that the user can perform based on the interface 25. The transfer service may be understood as transmitting information across applications such as the selected text. For details, refer to the foregoing descriptions.

Times marked on the timeline shown in FIG. 2A to FIG. 2E respectively correspond to times of operations on the interfaces or durations of content displayed in the interfaces. For details, refer to the foregoing descriptions. Details are not described herein again. It may be understood that, the process shown in FIG. 2A to FIG. 2E may be divided into four stages: a stage of dragged object floating, a stage of "door opening" preparation, a stage of "door opening", and a stage of "door closing".

It may be learned from FIG. 2A to FIG. 2E that, according to the information transmission method provided in this embodiment, there is no need to drag the to-be-transmitted information to the edge region of the screen, thereby improving convenience of the operation, especially for a one-handed operation. Moreover, the first animation can provide time for loading the second application, thereby improving user experience. In addition, setting of the "door closing" region facilitates the user to interrupt the information transmission process, thereby further improving the convenience of the operation.

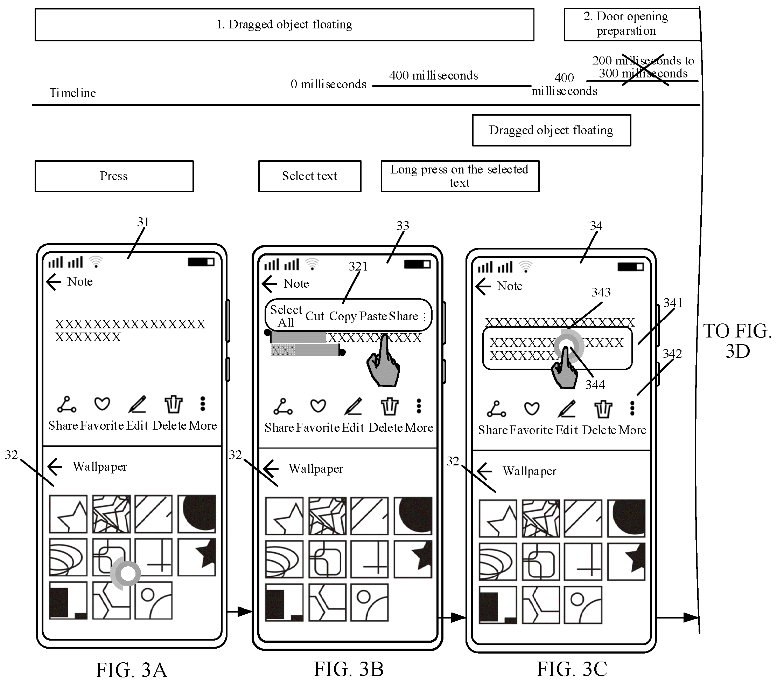

Split-screen display is a function provided for facilitating the user to view or operate a plurality of applications at the same time. The information transmission method disclosed in the embodiments of this application can be used in combination with the split-screen display. It may be understood that, the split-screen display is only a manner of displaying interfaces of a plurality of applications, and a multi-window function can also display the interfaces of the plurality of applications on the screen. FIG. 3A to FIG. 3E provide another information transmission method by using a split-screen display function as an example.

As shown in FIG. 3A, an interface 31 of a first application and an interface 32 of a third application are displayed on a screen. An example of the first application is notes, and an example of the third application is a wallpaper. The interface 31 of the first application and the interface 32 of the third application are displayed on the same screen in a split-screen manner. It may be understood that, in FIG. 3A, a top-and-bottom split screen is used as an example, and it may also be set as a left-and-right split screen or a picture-in-picture split screen. This is not limited herein.

A user may select content displayed in the interface 31 as to-be-transmitted information. As shown in FIG. 3B, the user selects a text in the interface 31. During the text selection process, an operation control bar 321 pops up in the interface. For the function of the operation control bar 321, refer to FIG. 2B. Details are not described herein again.

As shown in FIG. 3B, an operation performed by the user on the interface 31 of the first application results in an interface 33, and the interface 32 remains unchanged. For ease of user operations, the selected text is displayed differently from other displayed content. For example, the selected text is displayed in a preset background color in the interface 33.

As shown in FIG. 3C, after the user presses and holds the selected text for more than a first duration threshold, such as 400 milliseconds (that is, a long press), the interface switches from the interface 33 to an interface 34. The interface 34 includes a dragged object 341, a non-dragged object 342, a movement range 343, and a cursor 344. For the styles, forms, and obtaining manners of the dragged object 341, the non-dragged object 342, the movement range 343, and the cursor 344, refer to FIG. 2C. The user does not perform an operation on the interface 32. Therefore, in FIG. 3C, the interface 32 remains unchanged.

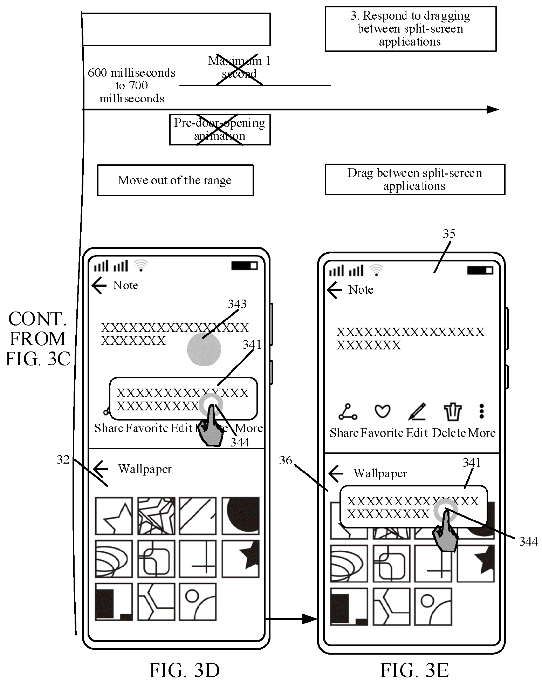

As shown in FIG. 3D, during the movement of the dragged object 341 through the drag operation, the cursor 344 moves with the movement of the finger of the user. In this embodiment, it is assumed that the cursor 344 moves out of the movement range 343 with the finger of the user. It may be understood that, the cursor 344 moving out of the movement range 343 indicates that the cursor 344 moves partially out of the movement range 343. As shown in FIG. 3D, the cursor 344 moves entirely out of the movement range 343, that is, there is no overlap between the cursor 344 and the movement range 343. In addition, the cursor 344 moving out of the movement range 343 may also indicate that the cursor 344 partially overlaps with the movement range 343.

In a split-screen display scenario, because interfaces of a plurality of applications are displayed, when the cursor 344 moves out of the movement range 343, it may be inferred that the user may intend to drag the to-be-transmitted information between interfaces of applications in split-screen display. Therefore, consistent with the technical orientation of the embodiment shown in FIG. 2A to FIG. 2E, when the cursor 344 moves out of the movement range 343, a cross-application transmission interface is not displayed, nor is a first animation displayed.

As shown in FIG. 3E, an interface 35 of the first application and an interface 36 of the third application are displayed in response to the cursor 344 moving out of the movement range 343 and the dragged object 341 being moved from the interface of the first application in split-screen display to the interface of the third application.

The interface 35 may be the same as or different from the interface 31. For example, in the interface 35, the selected text and unselected content are displayed differently, for example, in different colors. A difference between the interface 36 and the interface 32 lies in that the interface 36 further displays the dragged object 341 and the cursor 344. The dragged object 341 is transmitted to the third application when the user releases the finger. Herein, for example, both the dragged object and the cursor are the same as those in the interface 34, but they may alternatively be set to be different.

Compared with the operations corresponding to the interfaces shown in FIG. 2A to FIG. 2E, a difference of the operations corresponding to the interfaces in FIG. 3A to FIG. 3E lies in that because the operation corresponding to FIG. 3D is "Move out of the range", an electronic device does not display a pre-door-opening animation. Accordingly, the operation corresponding to FIG. 3E is "Drag between split-screen applications". Therefore, the processes shown in FIG. 3A to FIG. 3E include the following stages: a stage of dragged object floating, a stage of "door opening" preparation, and a stage of responding to dragging between split-screen applications.

With reference to FIG. 2A to FIG. 2E and FIG. 3A to FIG. 3E, it can be seen that, by setting the movement range, two different manners of cross-application information transmission can be implemented. The user can transmit information obtained in the first application to the second application in the manner shown in FIG. 2A to FIG. 2E, or can transmit the information obtained in the first application to the third application in the manner shown in FIG. 3A to FIG. 3E. Therefore, the second application can be conveniently invoked in a scenario in which only the first application is displayed on the screen, and cross-application information transmission can further be implemented based on logic of the interfaces of the plurality of applications in a scenario in which the interfaces of the plurality of applications are displayed on the screen. Therefore, the information transmission method provided in the embodiments of this application not only can improve convenience of cross-application information transmission, but also can be compatible with cross-application transmission logic of the interfaces of the plurality of applications.

In the embodiments shown in FIG. 2A to FIG. 2E and FIG. 3A to FIG. 3E, the to-be-transmitted information, such as a text, is selected through a press operation. It may be understood that, some applications have inherent logic for the press operation. The information transmission method provided in the embodiments of this application can improve the convenience of cross-application information transmission while following the inherent operation logic of the applications.

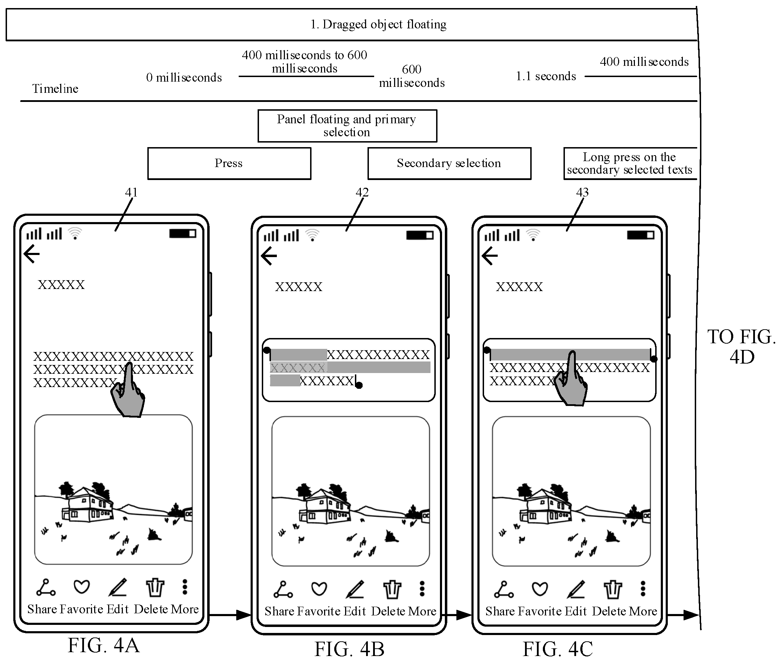

FIG. 4A shows an interface 41 displayed by the first application. When the user presses a text in the interface 41 for a fourth duration threshold (such as any duration between 400 milliseconds and 600 milliseconds), the first application is triggered to execute the inherent logic. In this embodiment, as shown in FIG. 4B, an example in which the first application executes the inherent logic is that a text region in the interface 42 floats, and texts in the text region are all selected.

After the first application executes the inherent logic, the user may continue to perform a cross-application information transmission process. In this embodiment, assuming that the user intends to transmit some texts in the text region across applications, the user may perform a secondary selection on all the selected texts, where the secondary selection may be understood as selecting a part or all of the selected texts as secondary selected texts. As shown in an interface 43 shown in FIG. 4C, the user selects a part of the selected texts as the secondary selected texts, and the secondary selected texts are differently displayed from the other texts. For example, the secondary selected texts are displayed in a preset background color, and the other texts are displayed in the same as in the interface 41, to indicate that the other texts are not selected.

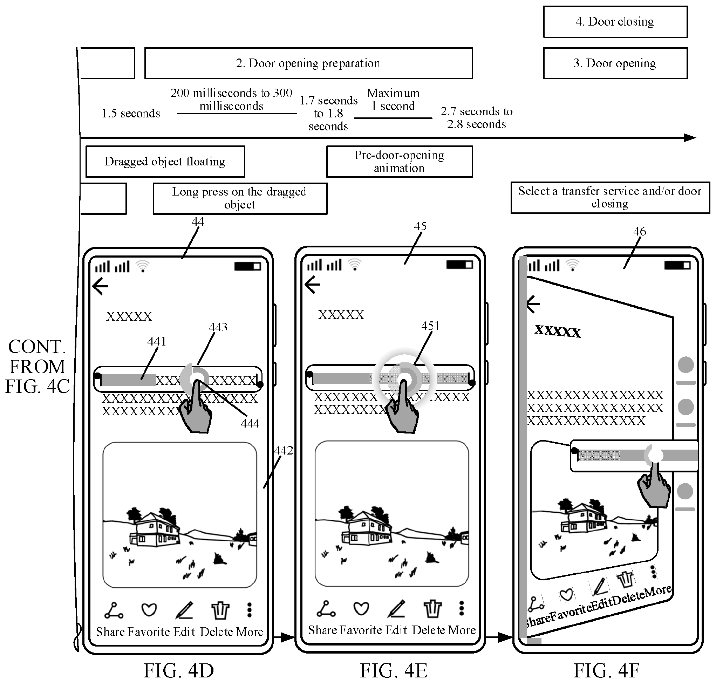

When the user presses and holds the selected texts for no less than a first duration threshold, such as 400 milliseconds (that is, a long press), as shown in FIG. 4D, an interface 44 displays a dragged object 441, a non-dragged object 442, a movement range 443, and a cursor 444. If the cursor 444 does not move out of the movement range 443 within a display duration of the dragged object 441 that is not less than a second duration threshold (such as any duration between 200 milliseconds and 300 milliseconds), a first animation 451 is displayed as shown in an interface 45 shown in FIG. 4E.

After the first animation 451 ends, as shown in FIG. 4F, a cross-application transmission interface 46 is displayed. For specific content in the cross-application transmission interface 46, refer to FIG. 2E. Details are not described herein again.

In FIG. 4A to FIG. 4F, "press" corresponding to the interface 41 and the interface 42 may be understood as triggering a user operation that triggers switching from the interface 41 to the interface 42. "Panel floating and primary selection" corresponding to the interface 42 may be understood as an example of main content displayed under the inherent logic of the application displayed in the interface 42 after the user performs the "Press". "Secondary selection" corresponding to the interface 42 and the interface 43 may be understood as a second selection of the user on the texts, which triggers switching from the interface 42 to the interface 43.

"Long press on secondary selected texts" corresponding to the interface 43 and the interface 44 may be understood as a long-press operation of the user on the secondary selected texts, which triggers switching from the interface 43 to the interface 44. 400 milliseconds shown in the timeline is a minimum duration of the long press on the secondary selected texts. "Long press on the dragged object" corresponding to the interface 44 and the interface 45 may be understood as a long-press operation of the user on the dragged object, which triggers switching from the interface 44 to the interface 45, and a minimum duration of the long press on the dragged object is 200 milliseconds to 300 milliseconds, as shown in the timeline. "Select a transfer service and/or door closing" corresponding to the interface 46 represents an operation that the user can perform based on the interface 46. Similarly, FIG. 4A to FIG. 4F further show four stages included.

The information transmission method shown in FIG. 4A to FIG. 4F can perform the secondary selection on the texts and trigger the cross-application information transmission interface based on an inherent text selection function of an application triggered by a long press on the texts in an application interface, thereby achieving a cross-application transmission function.

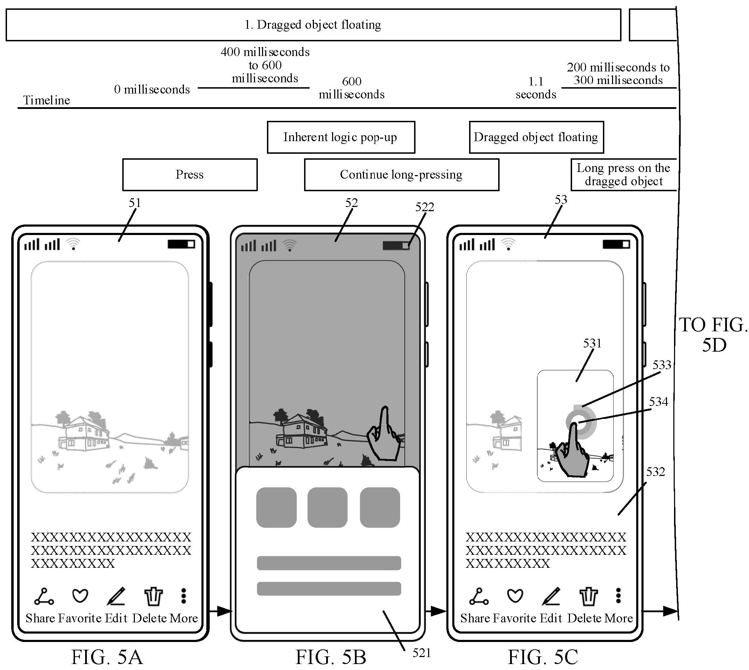

FIG. 5A shows an interface 51 of the first application, and the interface 51 includes an image and texts. It is assumed that the user intends to transmit the image in the interface 51 across applications. The user presses the image in the interface 51. After a press duration reaches a fourth duration (such as any duration between 400 milliseconds and 600 milliseconds), the first application is triggered to execute the inherent logic. As shown in FIG. 5B, the first application displays an interface 52. In the interface 52, the image displays a selected visual effect. In this embodiment, a dark layer 522 (which may also be referred to as a mask or a mask layer) is displayed on the selected image as an example. The interface 52 further displays an editing item 521. The editing item 521 includes editing option controls such as "Save" and a quick sharing control such as information about several contacts (not shown in FIG. 5A to FIG. 5E). In this case, the user may edit or forward the image by operating the editing item 521.

If the user continues to press the image after pressing the image for a third duration, an interface 53 is displayed, as shown in FIG. 5C. The interface 53 includes a dragged object 531, a non-dragged object 532, a movement range 533, and a cursor 534. The dragged object 531 is an image obtained after the image in the interface 51 is scaled down. The non-dragged object 532 includes all content in the interface 51, and to indicate that the dragged object is the image, the non-dragged object 532 further includes a semi-transparent layer covering the image displayed in the interface 51.

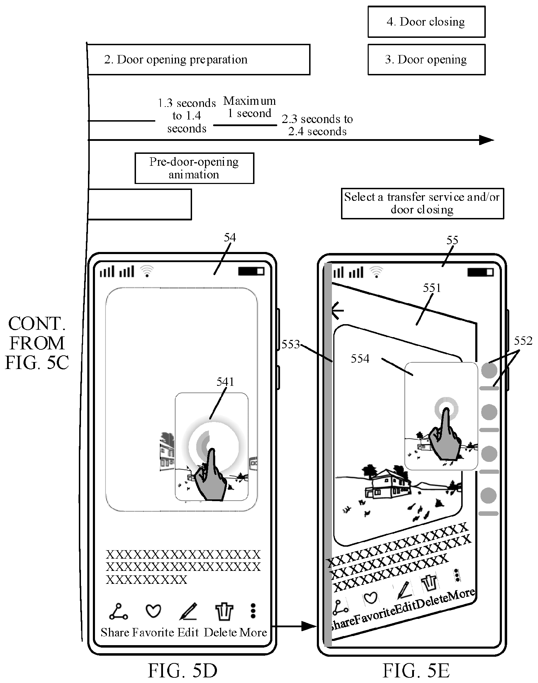

If a display duration of the dragged object 531 reaches a second duration threshold (such as any duration between 200 milliseconds and 300 milliseconds), and the cursor 534 does not move out of the movement range 533, a first animation 541 is displayed in the interface 54, as shown in FIG. 5D.

After the first animation 541 ends, as shown in FIG. 5E, a cross-application transmission interface 55 is displayed. The cross-application transmission interface 55 includes an application interface 551 having a "door opening" effect, information 552 about at least one second application, a "door closing" region 553, and to-be-transmitted information 554.

For meanings of the correspondence between the interfaces and the operations, the correspondence between the interfaces and the steps performed by the electronic device, and the times on the timeline that are shown in FIG. 5A to FIG. 5E, refer to FIG. 4A to FIG. 4F. Details are not described herein again.

It can be seen from FIG. 4A to FIG. 4F and FIG. 5A to FIG. 5E that, in addition to improving convenience of cross-application information transmission, the information transmission method according to the embodiments can further be combined with original operation logic of an application, to implement cross-application information transmission based on the original operation logic of the application, thereby providing better compatibility.

To further improve the convenience of cross-application information transmission, based on the foregoing embodiments, a "regret" space is provided for the user. In other words, when the user actively interrupts a "door opening" process or selects "door closing", the "door opening" effect can further be triggered, thereby continuing to implement cross-application information transmission.

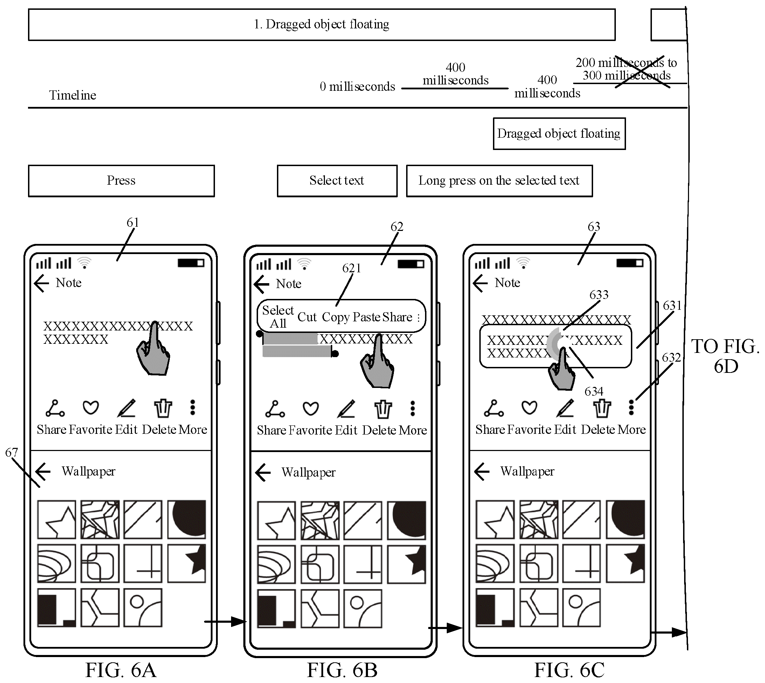

FIG. 6A to FIG. 6F show another information transmission method according to an embodiment of this application.

FIG. 6A shows a split-screen display interface of a first application and a third application. An interface 61 of the first application is the same as the interface 31 of the first application in FIG. 3A, and an interface 67 of the third application is the same as the interface 32 of the third application in FIG. 3A. FIG. 6B shows an operation of the user selecting a text in the interface of the first application. For content displayed in the interface 62, refer to FIG. 3B. Details are not described herein again. FIG. 6C shows a case in which the interface of the first application switches from the interface 62 to an interface 63 when a long press on the selected text exceeds a first duration threshold, for example, 400 milliseconds. The interface 63 includes a dragged object 631, a non-dragged object 632, a movement range 633, and a cursor 634. For a style and a function of the dragged object 631, refer to the dragged object 341 shown in FIG. 3A to FIG. 3E, for content of the non-dragged object 632, refer to the non-dragged object 342 shown in FIG. 3A to FIG. 3E, for a style and a function of the movement range 633, refer to the movement range 343 shown in FIG. 3A to FIG. 3E, and for a style and a function of the cursor 634, refer to the cursor 344 shown in FIG. 3A to FIG. 3E.

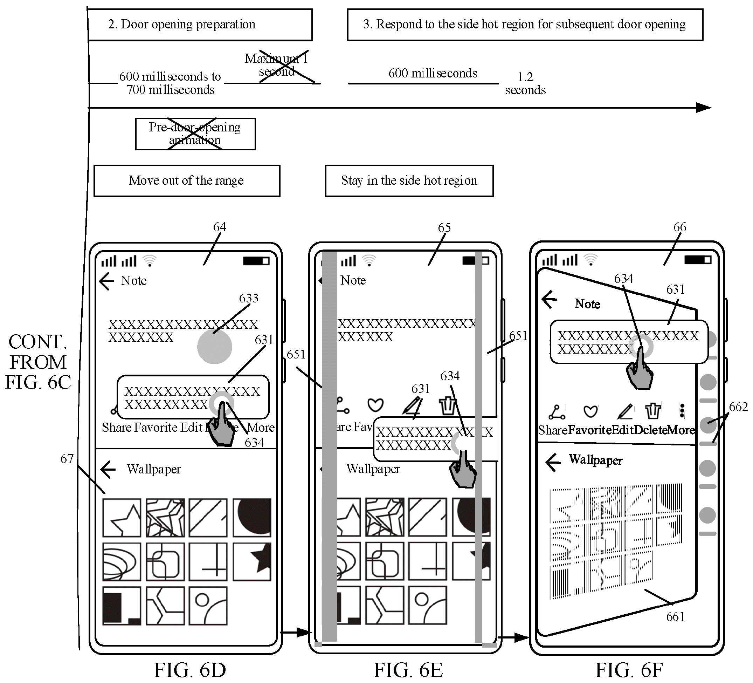

In this embodiment, assuming that the cursor 634 follows the finger of the user to move out of the movement range 633, as shown in an interface 64 shown in FIG. 6D, an electronic device does not display a first animation, or a cross-application transmission interface. In this case, if the user releases the finger on the interface 64 of the first application, the dragged object 631 is released, and the interface switches from the interface 64 to the interface 61. If the user drags the dragged object 631 to the interface 67 of the third application and then releases the finger, the selected text carried by the dragged object 631 is transmitted to the third application.

However, in this embodiment, if the user expects to continue to transmit the selected text to the third application in a scenario shown in FIG. 6D, the user may drag the dragged object 631 to a "door opening" hot region at the edge of the screen, as shown in FIG. 6E, an interface 65 is displayed. The interface 65 newly displays the "door opening" hot region 651 based on the interface 64. When a duration for which the user keeps the dragged object 631 staying in the "door opening" hot region 651 reaches a preset fifth duration threshold, for example, 600 milliseconds, a "door opening" effect can be triggered again. It may be understood that, positions of the dragged object 631 and the cursor 634 in the interface 65 may be different from those in the interface 64. It may be understood that, because in the interface 65, the "door opening" effect is triggered by staying in the "door opening" hot region, compared with the interface 54, in addition to the newly added "door opening" hot region 651, the interface 65 also differs in that the movement range 633 is no longer displayed, to clarify operation logic and reduce interference of irrelevant content to the user.

The "door opening" effect triggered by staying in the "door opening" hot region is shown in FIG. 6F, where a cross-application transmission interface 66 is displayed. The interface 66 includes an interface 661 having the "door opening" effect, information 662 about at least one second application, a dragged object 631, and a cursor 634.

The interface 661 having the "door opening" effect may be obtained through a perspective transformation between the interface of the first application and the interface of the third application shown in FIG. 6A. For the information 662 about the at least one second application, refer to FIG. 2E. Details are not described herein again.

The user drags the dragged object 631 to information about any second application, to transmit the selected text to the second application.

It may be understood that, the to-be-transmitted information 254 in FIG. 2E is a scaled-down image of the dragged object 231, such as a thumbnail. In addition, to reduce interference to the user, the cursor is no longer displayed. In FIG. 6F, the dragged object 631 and the cursor 634 are displayed. The two manners are selectable manners under the "door opening" effect, and may be combined in any manner. For example, when the thumbnail of the dragged object is displayed, the cursor is further displayed. The display manner shown in the figure is not limited in the embodiments of this application.

It may be understood that, the interface 66 shown in FIG. 6F may further display a "door closing" hot region (not shown in FIG. 6A to FIG. 6F).

Same as in FIG. 3A to FIG. 3E, in FIG. 6A to FIG. 6F, a stage 2 of "door opening" preparation is interrupted, so that a pre-door-opening animation is not displayed. Compared with FIG. 3A to FIG. 3E, in FIG. 6A to FIG. 6F, "Stay in the side hot region" corresponding to the interface 65 indicates moving the dragged object to the side "door opening" hot region and staying in the hot region "door opening" for no less than 600 milliseconds. Another difference from FIG. 3A to FIG. 3E lies in that the third stage in FIG. 6A to FIG. 6F is "3. Respond to the side hot region for subsequent door opening".

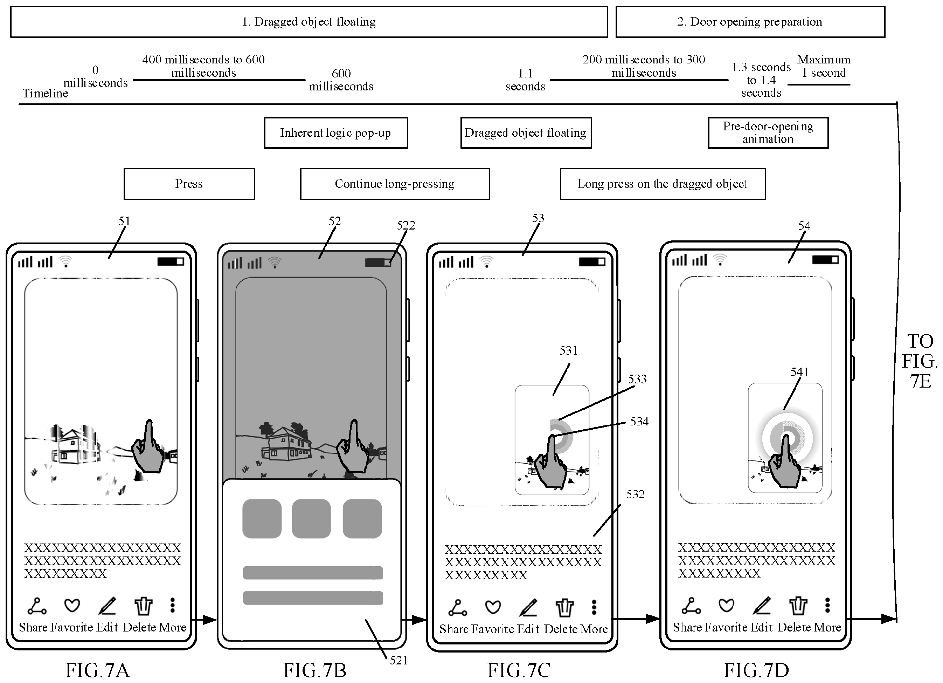

FIG. 7A to FIG. 7H show another information transmission method according to an embodiment of this application, which is further improved based on the process shown in FIG. 5A to FIG. 5E.

For FIG. 7A to FIG. 7E, refer to FIG. 5A to FIG. 5E. Details are not described herein again.

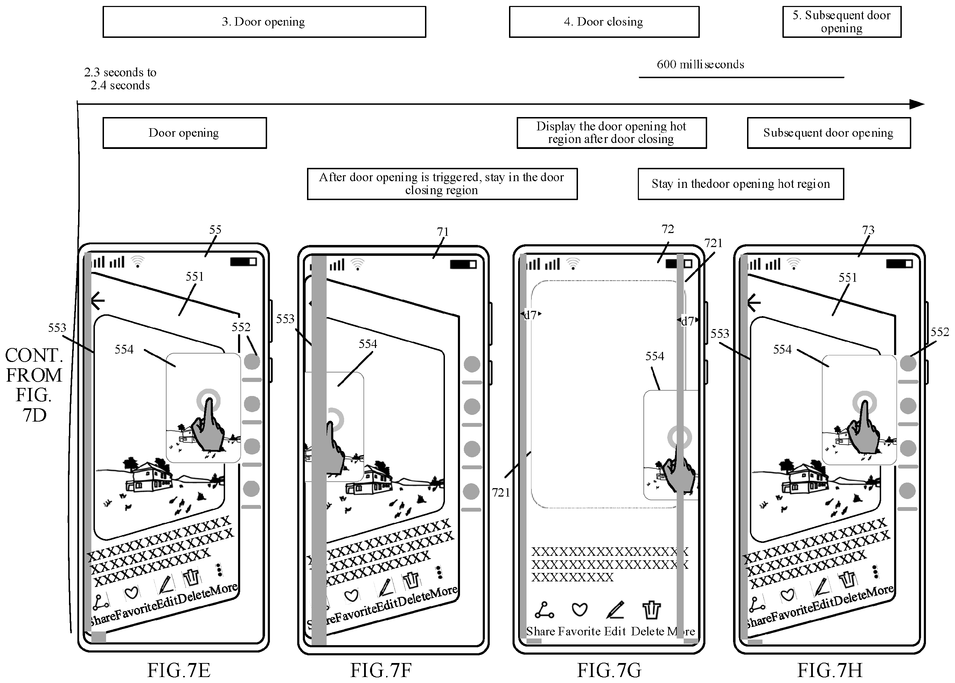

In this embodiment, it is assumed that the user drags a dragged object 554 to a "door closing" hot region 553 in an interface shown in FIG. 7E, as shown in an interface 71 shown in FIG. 7F. If the user keeps the dragged object 554 staying in the "door closing" hot region 553 for a third duration threshold, such as 600 milliseconds, "door closing" is triggered. "Door closing" means that the interface no longer displays information about a second application and a "door opening" effect. However, in this embodiment, after "door closing", a trigger region for subsequent "door opening" is reserved, as shown in FIG. 7G. If the user does not release the finger after "door closing", that is, still tapping or dragging the dragged object 554, the dragged object 554 is further displayed on an interface 72. In addition to the dragged object 554, the interface 72 further includes a "door opening" hot region 721 (which may also be referred to as a side hot region), and the "door opening" hot region 721 is located on an edge region of a screen. In FIG. 7G, the edge region of the screen is exemplified by a left edge region and a right edge region of the screen, which certainly may also be a top edge region and/or a bottom edge region. An example of a range of the edge region is extending inward 40 dp from the edge of the screen, that is, a length represented by d7 in FIG. 7G. It may be understood that, the "door opening" hot region 721 in FIG. 7G is in a visible state, or may be set to be in an invisible state. For example, the "door opening" hot region 721 is visible the first time the function provided in this embodiment is used, but is invisible after a plurality of times.

If the user drags the dragged object 554 to the "door opening" hot region 721 based on the interface 72 and it stays for a duration, subsequent "door opening" is triggered, as shown in FIG. 7H. In FIG. 7A to FIG. 7H, an example in which an interface 73 displayed in FIG. 7H is the same as the interface 55 displayed in FIG. 7E is used. The interface 73 may also be different from the interface 55, but includes at least information 552 about the second application and the dragged object 554. After the subsequent "door opening", the user may implement cross-application information transmission based on the interface 73. Details are not described herein again.

Based on the interface 72 shown in FIG. 7A to FIG. 7H, after "door closing", if the user releases the finger, that is, releases the dragged object 554, the interface 71 switches to the interface 51 in FIG. 7A.

It can be seen from the process shown in FIG. 7A to FIG. 7H, after "door closing", the user can move the dragged object to the "door opening" hot region, to achieve the subsequent "door opening", thereby improving flexibility of cross-application information transmission.

Compared with FIG. 5A to FIG. 5E, FIG. 7A to FIG. 7H further show "Stay in the door closing region after door opening" corresponding to the interface 71 and the interface 72, which indicates that the user drags the dragged object 554 to the "door closing" region 553 based on the interface 55, as shown in the interface 71, thereby triggering switching from the interface 71 to the interface 72. "Stay in the door opening hot region" corresponding to the interface 72 and the interface 73 indicates that the dragged object 554 stays in the "door opening" hot region 721 for 600 milliseconds shown on the timeline (an example of the second preset duration), thereby triggering the subsequent "door opening", that is, switching from the interface 71 to the interface 72.

The processes shown in FIG. 7A to FIG. 7H includes five stages. The stage of "door opening" and the stages before the stage of "door opening" are described above. After the stage of "door opening", the process further includes a stage of "door closing" and a stage of subsequent "door opening". It may be understood that, the process may further include a stage of "door closing" after the stage of subsequent "door opening" (not shown in FIG. 7A to FIG. 7H).

It can be seen from the processes shown in FIG. 6A to FIG. 6F and FIG. 7A to FIG. 7H that, after "door opening" loading is interrupted or after "door closing", the user may trigger the subsequent "door opening", to provide a more flexible and efficient information transmission function for the user.

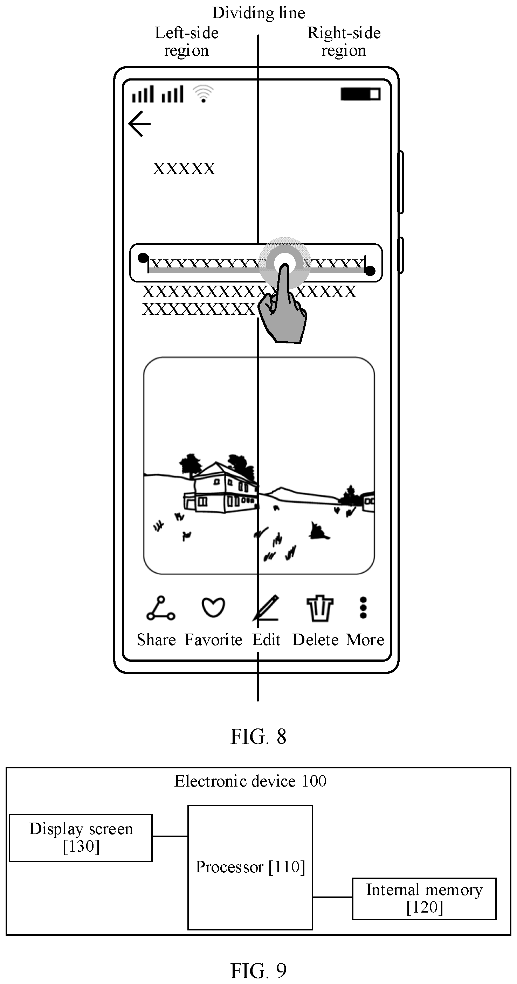

Based on the processes shown in FIG. 2A to FIG. 2E, FIG. 3A to FIG. 3E, FIG. 4A to FIG. 4F, FIG. 5A to FIG. 5F, FIG. 6A to FIG. 6F, and FIG. 7A to FIG. 7H, to further improve convenience of a one-handed operation, a left-side or right-side "door opening" effect on is displayed based on a position of the finger in contact with the screen. FIG. 2A to FIG. 2E, FIG. 3A to FIG. 3E, FIG. 4A to FIG. 4F, FIG. 5A to FIG. 5F, FIG. 6A to FIG. 6F, and FIG. 7A to FIG. 7H each assume that the user operates the screen with the right hand, that is, the position of the finger in contact with the screen is in a right-side region as shown in FIG. 8, thereby triggering the right-side "door opening" effect. It may be understood that, the right-side "door opening" refers to displaying the information about the second application on the right side of a display screen, as shown in FIG. 2A to FIG. 2E, FIG. 3A to FIG. 3E, FIG. 4A to FIG. 4F, FIG. 5A to FIG. 5F, FIG. 6A to FIG. 6F, and FIG. 7A to FIG. 7H.

In FIG. 8, a center line of the screen is used as a dividing line, a region to the right of the dividing line is used as a right-side region, and a region to the left of the dividing line is used as a left-side region. It may be understood that, the dividing line shown in FIG. 8 is merely an example and is not limiting. A range of the right-side region and a range of the left-side region may be pre-configured.

With reference to the processes shown in FIG. 2A to FIG. 2E, FIG. 3A to FIG. 3E, FIG. 4A to FIG. 4F, FIG. 5A to FIG. 5F, FIG. 6A to FIG. 6F, and FIG. 7A to FIG. 7H, an implementation of obtaining the position of the finger in contact with the screen is to use a position of the finger when performing the operation that triggers the cursor display (that is, the operation that triggers the display of the first interface) as the position of the finger in contact with the screen, that is, a position of a control point.

The foregoing embodiments are applied to an electronic device. The electronic device includes, but is not limited to, a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a dedicated camera (such as a single lens reflex camera or a card camera). A specific type of the electronic device is not limited in this application.

FIG. 9 shows an example of a structure of an electronic device.

As shown in FIG. 9, the electronic device 100 may include a processor 110, an internal memory 120, and a display screen 130.

It may be understood that, a schematic structure in this embodiment of the present invention does not constitute a specific limitation on an electronic device 100. In some other embodiments of this application, the electronic device 100 may include more or fewer components than those shown in the figure, some components may be combined, some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a timing signal, and implement control on instruction fetching and instruction execution.

A memory may be further disposed in the processor 110, and is configured to store instructions and data. In some embodiments, the memory of the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access, and reduces a waiting time of the processor 110, so that system efficiency is improved.

The electronic device 100 implements a display function through the GPU, the display screen 130, the application processor, and the like. The GPU is a microprocessor for image processing and is connected to the display screen 130 and the application processor. The GPU is configured to perform mathematical and geometric calculations and perform graphics rendering. The processor 110 may include one or more GPUs that perform program instructions to generate or change display information.

The display screen 130 is configured to display an image, a video and the like.

The internal memory 120 may be configured to store computer executable program code. The executable program code includes the instructions. The processor 110 runs the instructions stored in the internal memory 120 and/or the instructions stored in the memory disposed in the processor, to implement various functional applications and data processing of the electronic device 100.

In this application, after the user pulls up the information element in the interface, the GPU in the electronic device 100 may perform, based on the content displayed in the display screen 130, three-dimensional transformation on the content to create, on the screen, a visual effect of pushing the original interface inward, and display a recommended application and/or service icon on a side edge of the screen of the electronic device.

In addition, in this embodiment of this application, after the user pulls up the information element in the interface, the processor 110 may recognize the information element, including recognizing a type of the information element and specific content in the information element, and determine a corresponding application icon and/or application service icon based on a recognition result, and generate a corresponding program instruction. The program instruction may be used to change display information in the display screen 130, for example, update an interface in the display to a cross-application transmission interface. The icon displayed in the cross-application transmission interface is the foregoing application icon and/or application service icon determined by the processor 110 based on the recognition result.

In some embodiments, after the user completes information transmission by using the "cross-application transmission interface", the processor 110 may further obtain a type of application service to which the user transmits information, generate a corresponding program instruction based on the obtained result, and display a corresponding interface (for example, the interface may display a snack bar, a capsule, a small window, and the like) on the screen with reference to the GPU, to feed back a result of information element transmission to the user.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claim.

## Claims

1. An information transmission method, applied to a first electronic device, the method comprising:
displaying a first interface in response to a first operation, wherein the first interface comprises to-be-transmitted information and a first region, a distance between the first region and a control point does not exceed a first range, and the control point is a position point at which the first operation is performed;
displaying a second interface in response to a second operation on the to-be-transmitted information within the first region, wherein the second interface comprises information about applications and the to-be-transmitted information; and
transmitting the to-be-transmitted information to a target application in response to a third operation on the to-be-transmitted information, wherein the target application is at least one of the applications.

2. The method according to claim 1, wherein the first interface further comprises:
a cursor, wherein the cursor is configured to indicate a position of the control point.

3. The method according to claim 2, wherein the second operation comprises the cursor not extending the first region and a display duration of the first interface reaching a first preset duration.

4. The method according to claim 1, wherein before the displaying a second interface, the method further comprises:
displaying a first animation in the first interface.

5. The method according to claim 4, wherein the first interface further comprises:
a cursor, wherein the cursor is configured to indicate a position of the control point; and
the displaying a first animation comprises:
displaying the first animation in response to the cursor not extending the first region and a display duration of the first interface reaching a first preset duration.

6. The method according to claim 5, wherein during the displaying a first animation, the method further comprises:
terminating the display of the first animation in response to the cursor extending the first region, wherein the termination of the display of the first animation indicates that the second interface is not displayed.

7. The method according to any one of claims 1 to 6, wherein the second interface further comprises:
a first control region, wherein the first control region is configured to trigger an exit from the second interface.

8. The method according to any one of claims 1 to 7, wherein the first interface comprises a first sub-interface and a second sub-interface, and the to-be-transmitted information is displayed in the first sub-interface; and
the method further comprises:
transmitting the to-be-transmitted information to the second sub-interface in response to a fourth operation on the to-be-transmitted information outside the first region.

9. The method according to any one of claims 1 to 8, wherein before the displaying a first interface, the method further comprises:
displaying an interface of a first application, wherein the interface of the first application comprises first information; and
performing, in response to an operation on the first information, a function pre-configured by the first application, wherein the function comprises displaying a first object in the interface of the first application based on the operation on the first information; and
the displaying a first interface comprises:
displaying the first interface in response to a fifth operation on the first object.

10. The method according to any one of claims 1 to 9, further comprising:
displaying a fourth interface in response to a sixth operation on the to-be-transmitted information outside the first region, wherein the fourth interface is different from the second interface, and the fourth interface comprises a preset second control region; and
displaying the second interface in response to a seventh operation based on the fourth interface, wherein the seventh operation comprises moving the to-be-transmitted information to the second control region.

11. The method according to claim 10, wherein the seventh operation further comprises:
keeping the to-be-transmitted information in the second control region for a second preset duration.

12. The method according to any one of claims 1 to 11, wherein after the displaying a second interface, the method further comprises:
exiting the second interface and displaying a fifth interface in response to an operation of moving the to-be-transmitted information to a first control region in the second interface, wherein the fifth interface comprises a preset second control region; and
displaying the second interface again in response to an eighth operation on the to-be-transmitted information, wherein the eighth operation comprises moving the to-be-transmitted information to the second control region.

13. The method according to claim 12, wherein the eighth operation further comprises:
keeping the to-be-transmitted information in the second control region for a second preset duration.

14. The method according to any one of claims 1 to 13, wherein a second region is obtained based on a distance between a position of the control point and an edge of a display screen.

15. An electronic device, comprising one or more processors, a memory, and a touchscreen, wherein the memory is configured to store program code, and the processor is configured to run the program code, causing the electronic device to implement the information transmission method according to any one of claims 1 to 14.

16. A computer-readable storage medium, storing instructions, wherein the instructions, when run on an electronic device, cause the electronic device to perform the information transmission method according to any one of claims 1 to 14.
